# EUROPEAN PATENT SPECIFICATION

(11) **EP 2 673 786 B1**
(45) Date of publication and mention of the grant of the patent: **19.08.2015**
(21) Application number: 12870655.3
(22) Date of filing: 05.06.2012
(51) Int. Cl.: H01B 3/42, C08K 3/36, H01B 3/46, C08L 83/04

(54) **SOFT TACKY GEL FOR USE IN POWER CONVERTERS**
WEICHES UND KLEBRIGES GEL ZUR VERWENDUNG IN STROMWANDLERN
GEL MOU COLLANT UTILISÉ DANS DES CONVERTISSEURS DE PUISSANCE

(43) Date of publication of application: 18.12.2013
(73) Proprietor: Dow Corning Corporation, Midland, Michigan 48686-0994 (US); Dow Corning (China) Holding Co. Ltd., Shanghai 201203 (CN)
(72) Inventor: HANSON, Kris, Fremont, California 94536-3571 (US); KIM, Hongsub, Cupertino, California 95014 (US); LARSON, Kent, Midland, Michigan 48640 (US); ZARISFI, Afrooz, Midland, Michigan 48640 (US); ZOU, Lu, Shanghai 201203 (CN)
(74) Representative: Fyfe, Fiona Allison Watson
(86) International application number: PCT/CN2012/076460
(87) International publication number: WO 2013/131330

(56) References cited:
- EP-A1- 1 340 791
- EP-A2- 0 799 693
- WO-A1-2006/025552
- WO-A1-2007/037019
- CN-A- 101 663 351
- CN-A- 101 928 377
- JP-A- 2003 301 107
- JP-A- 2005 255 867
- US-A- 6 132 850
- US-A1- 2010 009 109
- US-A1- 2010 275 440
- DATABASE WPI Week 200817 Thomson Scientific, London, GB; AN 2008-C28031 XP002720600, & JP 2008 031295 A (TEIJIN LTD) 14 February 2008 (2008-02-14)
- MANEESH BAHADUR ET AL: "SILICONE MATERIALS FOR LED PACKAGING", PROCEEDINGS OF SPIE, S P I E - INTERNATIONAL SOCIETY FOR OPTICAL ENGINEERING, US, vol. 6337, 1 January 2006 (2006-01-01), pages 63370F-1, XP002522684, ISSN: 0277-786X, DOI: 10.1117/12.681715
- DATABASE WPI Week 200929 Thomson Scientific, London, GB; AN 2009-H14656 XP002720601, & WO 2009/044780 A1 (AICA KOGYO CO LTD) 9 April 2009 (2009-04-09)

## Description

### BACKGROUND OF THE INVENTION

Power converters and inverters find use in multiple power management applications. In particular, micro-inverters and power optimizers are critical components used in photovoltaic system. A power optimizer is a DC-to-DC converter technology developed to maximize energy throughput for optimal power harvest from photovoltaic or wind turbine systems. A micro-inverter essentially combines a power optimizer with a small inverter in a single case and is used on every panel in a photovoltaic system, while the power optimizer leaves the inverter in a separate box and uses only one inverter for the entire array. They have high reliability requirements including thermal management and environmental protection to survive outdoor usage exposed to elements. The current leading micro-inverter & power optimizer companies provide 25 years of warranty for their product, and thermal conductive pottants filling these devices are critical components to achieve this protection.

Pottants are used to fill the void space within the power converters to protect the components from the environment and prolonging the useful life of the device. Pottants need to adhere to the components of the device to minimize the exposure of the components to moisture and other elements. Further, because the system generates a certain amount of heat, thermal conductivity to dissipate heat is necessary for reliable extended use, and thus, such pottants need to be thermally conductive.

The existing technology for pottants for these devices suffers from various shortcomings. One commonly used pottant is polyurethane. However, this material in its currently used form develops cracks and causes cracking of transformers and other components within the converters after thermal cycling due to thermal expansion and contraction which puts stress on the components. Another problem is delamination of the pottant from the substrate within the converter after thermal cycling, allowing invasion of moisture and leading to a failure of the components. When a pottant is flowable, even when rather high in viscosity, it creates long term durability issues in that any crack or hole in the outer shell of the device could allow the material to leak out over time. Therefore, there exists a need for improvement in the protective, thermally conductive material for use as a pottant within a power converter.

### BRIEF SUMMARY OF THE INVENTION

A soft, tacky composition comprising a silicone gel as claimed is provided for use as a pottant within a power converter. Such composition is particularly useful for a small-scale inverter or converter.

### BRIEF DESCRIPTION OF THE DRAWINGS

Figure 1 is a schematic of a typical micro-inverter and a power converter.
Figure 2 is a schematic of an apparatus for measuring surface tackiness.
Figure 3 is a schematic of an apparatus for measuring thermal stress.

### DETAILED DESCRIPTION OF THE INVENTION

A polymer composition useful as a pottant in a power converter/inverter, in particular small-scale power converter and inverter, the use of such pottants in power converters and inverters, and a device comprising such pottants are provided.

Polymer composition. A polymer composition useful as a pottant of the instant invention, when cured, is soft, that is, it has a hardness measured by Shore A scale less than Shore 00 30. In some embodiments, the hardness of the cured polymer composition is at or below the lower limit of Shore 00 scale, and is measured by the probe penetration method. The cured polymer is not fluid and is not flowable. The cured composition is also thermally conductive, having thermal conductivity of no less than 0.2 W/m·K, alternatively more than 0.5, 1.0, 1.5, and further more than 2.0 W/m·K. The polymer composition may be non-crosslinked entangled long chain polymers or materials with sufficient internal hydrogen bonding to be non-flowable but still soft.

The cured composition is not flammable. By "not flammable" it is meant that it passes UL 94 V-1 flammability rating or better. The cured composition preferably passes UL 94 V-1 at thickness equal to or less than 4 mm, preferably thickness equal to or less than 2 mm.

The polymer composition has a pre-cure viscosity of less than 3,000 mPa·s, and most preferably less than 1,500 mPa·s, measured at 25°C using a Brookfield DV-II+ cone and plate viscometer with spindle CP-52 at an rpm suitable for measuring said viscosity or using a Brookfield HADV or LVDV type viscometer with selected spindle appropriate for measuring said viscosity.

The cured polymer composition is also tacky. By tacky, it is meant that the surface of the cured material, when measured by the method described below, exhibits a tackiness value greater than or equal to 2.5 grams.

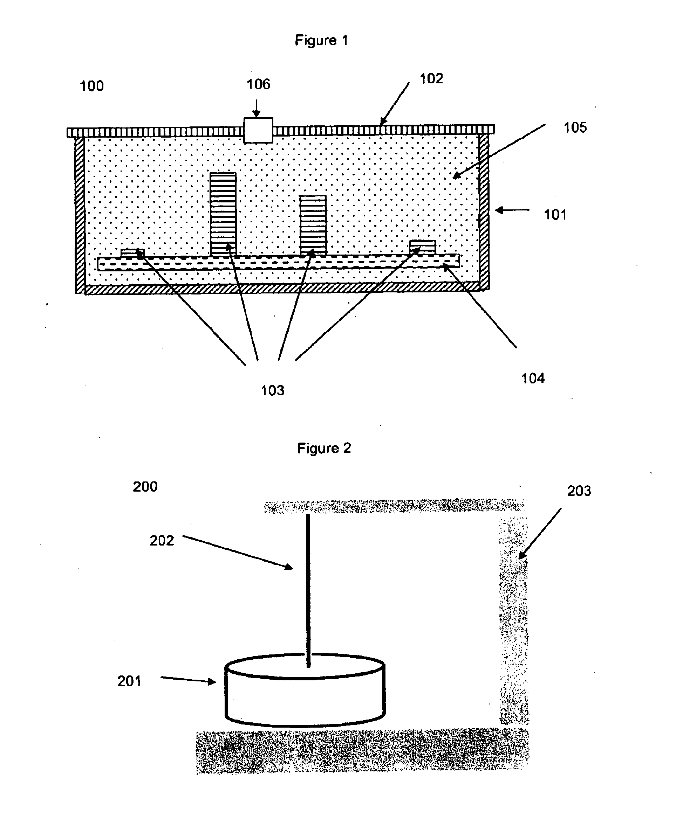

Surface tackiness measurement. A TA.XT.plus Texture Analyzer, available from Texture Technologies Corp., Scarsdale, New York, USA, is used for the method to measure surface tackiness of a material. SMS P/0.25S probe (spherical probe of ¼ inch diameter, stainless steel) is used. Figure 2 is a schematic of a texture analyzer 200. A sample 201 is placed below a probe 202 attached to the frame 203 of the texture analyzer. The probe 202 is lowered into the sample 201 with 2mm/s speed until probe 202 is in contact with sample 201. Once the probe contacting force reaches 1.0 g, it will trigger 30 grams contacting force for 5.0 seconds. After that, the probe lifts with 10mm/s speed and then maximum tackiness force is record as surface tackiness. Measurement is taken at temperature of 25 ± 2°C.

The pottants of the instant invention exhibit low thermal stress. The cured pottant composition exerts less than 1.0 x 10⁶, preferably less than 5.0 x 10⁵, even more preferably less than 3.0 x 10⁵ Pa, when tested for the thermal stress generation in the method described immediately below.

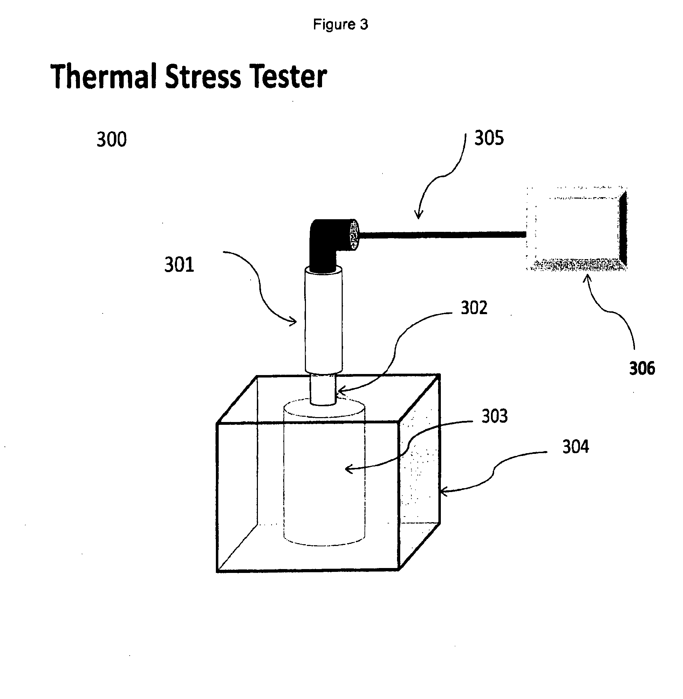

Thermal Stress Generation Measurement. A pressure measuring apparatus essentially as described by the schematic of Figure 3 is used. A thermal stress tester 300 consists of pressure transducer 301, which contains a flat membrane 302, a cylindrical container 303, which holds a pottant to be tested, an oil bath 304, a connecting cable 305, and a display 306. A pressure transducer is commercially available from, for example, Omega Engineering, Inc., under the name PX309 series. Pressure transducer 301 is securely screwed into a cylindrical container 303. The pressure transducer is connected to the cylindrical container 303 via the flat membrane 302, which is subjected to any pressure from within the cylindrical container 303. A pottant to be tested is mixed after each part is degassed sufficiently, poured into the cylindrical container 303 to completely fill the cylindrical container 303, and the cylindrical container 303 is closed. The pottant is fully cured at room temperature for 24 hours. The pottant-filled cylindrical container 303 is then immersed in an oil bath 304 which has been brought to a stable temperature, e.g. 80 degrees Celsius, wherein the oil surface is just above where the membrane 302 is located. The temperature of the cylindrical container 303 is brought to equilibrium with the temperature of the oil bath 304 and the pressure on the flat membrane 302 exerted by thermal expansion of the tested pottant is converted to electrical signals by pressure transducer 301 and indicated by the display 306, which is recorded.

Polymers. The polymer is an organopolysiloxane.

Optionally one or more plasticizer may be added to achieve the desired hardness. In preferred embodiments, plasticizers are not added. If added, plasticizers are well known in the art and are commercially available. Exemplary plasticizers are various adipinates and phthalates such as butyl benzyl phthalate and dialkyl phthalates including diisooctyl phthalate. Preferred plasticizers for use in the present invention are reactive and form covalent bonds or form ionic bonds with other components of the composition so that they are stably incorporated into the composition and do not flow out or bleed out. If used at all, the amount of the plasticizer should be such that the minimum amount needed to achieve the desired softness is added.

The organopolysiloxane of the instant invention is a cured material of a curable composition comprising:
(A) an organopolysiloxane having an average of at least 0.5 silicon-bonded alkenyl group per individual polymer molecule, which may be a single polymer or may include two or more polymers that differ in at least one of the following properties: structure, viscosity, average molecular weight, siloxane units, and sequence;
(B) an organopolysiloxane curing agent having at least two silicon-bonded hydrogen atoms per molecule;
(C) a hydrosilylation catalyst;

Component (A) is an organopolysiloxane having an average of at least 0.5 , more typically two or more, silicon-bonded alkenyl group(s) per individual polymer molecule. The organopolysiloxane may be or may include a single (type of) polymer, a copolymer, or a combination of two or more polymers. The (A) organopolysiloxane may have a molecular structure that is in linear form or branched linear form, or in dendrite form. The (A) organopolysiloxane may be or may include a homopolymer, a copolymer, or a combination of two or more polymers.

Component (A) may be further defined as an organoalkylpolysiloxane. The silicon-bonded alkenyl groups of the (A) organopolysiloxane are not particularly limited, and examples of suitable alkenyl groups are vinyl, allyl, butenyl, pentenyl, and hexenyl groups. Each alkenyl group may be the same or different and each may be independently selected from all others. Each alkenyl group may be terminal or pendant, and both may be found in the organoalkylpolysiloxane of (A). Vinyl groups are preferred.

Component (A) may also include silicon-bonded organic groups including, but not limited to, monovalent organic groups free of aliphatic unsaturation. These monovalent organic groups may have at least one and as many as 2 to 20 carbon atoms, are exemplified by, but not limited to, alkyl groups such as methyl; ethyl; and isomers of: propyl, butyl, t-butyl, pentyl, hexyl, heptyl, octyl, nonyl, decyl, undecyl, dodecyl, tetradecyl, hexadecyl, octadecyl, and eicosanyl; cycloalkyl groups such as cyclopentyl and cyclohexyl; and aromatic (aryl) groups such as phenyl, tolyl, xylyl, benzyl, and 2-phenylethyl; and halogenated alkyl groups such as 3,3,3,-trifluoropropyl. In certain embodiments, the organic groups are methyl groups. The organopolysiloxane of (A) may also include terminal groups that may be further defined as alkyl or aryl groups as described above, and/or alkoxy groups, and/or hydroxyl groups exemplified by methoxy, ethoxy, or propoxy groups, or hydroxyl groups.

In various embodiments, Component (A) may comprise the following formulae:

Formula (I): R¹₂R²SiO(R¹₂SiO)_{d}(R¹R²SiO)ₑSiR¹₂R²,

Formula (II): R¹₃SiO(R¹₂SiO)_{f}(R¹R²SiO)_{g}SiR¹₃, or combinations thereof.

In formulae (I) and (II), each R¹ is independently a monovalent organic group free of aliphatic unsaturation and each R² is independently an aliphatically unsaturated organic group. R¹ includes, but is not limited to, alkyl groups having any one of 1 to 10 carbon atoms, e.g. methyl; ethyl; isomers of: propyl, butyl, pentyl, hexyl, heptyl, octyl, nonyl, decyl; cycloalkyl groups such as cyclopentyl and cyclohexyl; and aryl groups such as phenyl, tolyl, xylyl, benzyl, and 2-phenylethyl. Each R² is independently an aliphatically unsaturated monovalent organic group, exemplified by alkenyl groups such as vinyl, allyl, butenyl, pentenyl, hexenyl, or heptenyl groups. R² may include halogen atoms or halogen groups.

Subscript "d" typically has an average value of at least 1, but may have a value ranging from 0.1 to 2000. Subscripts "e" and "f" each may be 0 or a positive number. Alternatively, subscript "e" may have an average value ranging from 0 to 2000. Subscript "g" has an average value of at least 1, and more typically, at least 2. Alternatively, subscript "g" may have an average value ranging from 1 to 2000.

In various embodiments, Component (A) is further defined as an alkenyldialkylsilyl end-blocked polydialkylsiloxane. In particular, the polydialkylsiloxane may be further defined as: polydimethylsiloxane (PDMS); a methyl (3,3,3-trifluoropropyl) polysiloxane; a copolymer of a methylvinylsiloxane and a dimethylsiloxane; a copolymer of a methyl (3,3,3-trifluoropropyl) siloxane and a dimethylsiloxane; a copolymer of a methylphenylvinylsiloxane and a dimethylsiloxane; or an organosiloxane copolymer composed of siloxane units represented by the following formulae: (CH₃)₃SiO_{½}, (CH₃)₂ (CH₂=CH)SiO_{½}, CH₃SiO_{3/2}, (CH₃)₂SiO_{2/2} Each of these polymers is end-blocked, i.e. capped at one or both molecular terminals, by dimethylvinylsiloxy groups or methylphenylvinylsiloxy groups or silanol groups. The aforementioned siloxanes may include phenyl instead of methyl in some amount.

The structure of the organopolysiloxane may be a straight chain, a partially branched straight chain, or a branched chain. Straight and partially branched straight chains are preferred. Some parts of the organopolysiloxane may form a cyclic structure in an equilibrium with a straight chain structure.

Component (B) is a cross-linker having an average of at least 2, 3, or more than 3 silicon-bonded hydrogen atoms per molecule and may comprise a silane or a siloxane, such as a polyorganosiloxane. The silicon-bonded hydrogen atoms may be terminal or pendant. Component (B) may also contain substituted or non-substituted monovalent hydrocarbon groups. Examples of suitable non-substituted monovalent hydrocarbon groups include alkyl groups having any one of between 1 and 10 carbon atoms e.g. methyl; ethyl; isomers of propyl, butyl, pentyl, hexyl, heptyl, octyl groups; cyclopentyl, cyclohexyl, or similar cycloalkyl groups; phenyl, tolyl, xylyl, or similar aryl groups; benzyl, phenethyl, or similar aralkyl groups; or 3,3,3-trifluoropropyl, 3-chloropropyl, or similar halogenated alkyl group. Preferable are alkyl, in particular, methyl groups.

Component (B) may also include siloxane units including, but not limited to, HR³₂SiO_{1/2}, R³₃SiO_{1/2}, HR³SiO_{2/2}, R³₂SiO_{2/2}, R³SiO_{3/2}, and SiO_{4/2} units, wherein each R³ is independently selected from monovalent organic groups free of aliphatic unsaturation as described in the preceding paragraph. In various embodiments, the (B) cross-linker includes or is a compound of the formulae:

Formula (III) R³₃SiO(R³₂SiO)h(R³HSiO)iSiR³₃,

Formula (IV) R³₂HSiO(R³₂SiO)j(R³HSiO)kSiR³₂H,

or a combination thereof.

In formulae (III) and (IV) above, subscripts "h" "j" and "k" each has an average value ranging from 0 to 2000, and subscript "i" has an average value ranging from 2 to 2000. Each R³ is independently a monovalent organic group. Suitable monovalent organic groups include alkyl groups having 1 to 20, 1 to 15, 1 to 10, 5 to 20, 5 to 15, or 5 to 10 carbon atoms, such as methyl; ethyl; isomers of: propyl, butyl, pentyl, octyl, decyl, undecyl, dodecyl, and octadecyl; cycloalkyl such as cyclopentyl and cyclohexyl; alkenyl such as vinyl, allyl, butenyl, and hexenyl; alkynyl such as ethynyl, propynyl, and butynyl; and aryl such as phenyl, tolyl, xylyl, benzyl, and 2-phenylethyl.

Component (B) may alternatively be further defined as: a methylhydrogen polysiloxane or a copolymer of a methylhydrogensiloxane and a dimethylsiloxane, either of which is capped at one or both molecular terminals with trimethylsiloxy groups, dimethylhydrogensiloxy groups or a combination thereof; a cyclic methylhydrogenpolysiloxane; and/or an organosiloxane composed of siloxane units represented by: (CH₃)₃SiO_{½}, (CH₃)₂HSiO_{½}, and SiO_{4/2}; tetra(dimethylhydrogensiloxy) silane, or methyl-tri(dimethylhydrogensiloxy) silane, or a dimethylpolysiloxane capped at one or both molecular terminals with any combination of the above-mentioned groups as long as at least one of these groups contains a silicon-bonded hydrogen atom.

It is also contemplated that Component (B) may be or include a combination of two or more organohydrogenpolysiloxanes that differ in at least one of the following properties: structure, average molecular weight, viscosity, siloxane units, and sequence. Component (B) may also include a silane. Dimethylhydrogensiloxy-terminated poly dimethylsiloxanes having relatively low degrees of polymerization (DP) (e.g., DP ranging from 3 to 100) are commonly referred to as chain extenders, and a portion of Component (B) may be or include a chain extender. In one embodiment, Component (B) is free of halogen atoms. In another embodiment, Component (B) includes one or more halogen atoms per molecule. It is contemplated that the gel, as a whole, may be free of halogen atoms.

The cross-linker of (B) may have a linear, a branched, or a partially branched linear, cyclic, dendrite, or resinous molecular structure.

The molar ratio of silicon-bonded alkenyl in component (A) to silicon bonded hydrogen in component (B), expressed herein as the SiH:Vi ratio, influences the physical property of a cured material of component (A) and component (B). In the instant invention, the SiH:Vi ratio is 0.1 to less than 1.5. When the SiH:Vi ratio is less than 0.1, the composition is difficult to cure completely. On the other hand, when the SiH:Vi ratio is 1.5 or greater, the reduced softness and the increased pressure that the cured polymer exerts on the components of a power converter device are undesirable. Preferably, the SiH:Vi ratio is 0.1 to 1.2, more particularly 0.1 to 1.0, and more particularly 0.3 to 0.7.

Component (C) is a catalyst and is not particularly limited and may be any known in the art. In one embodiment, Component (C) includes a platinum group metal selected from platinum, rhodium, ruthenium, palladium, osmium or iridium, organometallic compounds thereof, or combinations thereof. In another embodiment, Component (C) is further defined as a fine platinum metal powder, platinum black, platinum dichloride, platinum tetrachloride; chloroplatinic acid, alcohol-modified chloroplatinic acid, chloroplatinic acid hexahydrate; and complexes of such compounds, such as platinum complexes of olefins, platinum complexes of carbonyls, platinum complexes of alkenylsiloxanes, e.g. 1,3-divinyltetramethyldisiloxane, platinum complexes of low molecular weight organopolysiloxanes, for example 1,3-diethenyl-1,1,3,3 -tetramethyldisiloxane, complexes of chloroplatinic acid with β-diketones, complexes of chloroplatinic acid with olefins, and complexes of chloroplatinic acid with 1,3-divinyltetramethyldisiloxane.

Typically, Component (C) is present/utilized in an amount of from 0.01 to 1,000 ppm, alternatively 0.1 to 500 ppm alternatively 1 to 500 ppm, alternatively 2 to 200, alternatively 5 to 150 ppm, based on the total weight of (A) and (B).

In the embodiments of the instant invention, any of the polymers described above may be used and combined with (D) one or more filler(s).

Component (D) is a filler or combination of fillers. These fillers are heat conducting, reinforcing and/or non-reinforcing, flame retardant and/or non-flame retardant. Fillers may be dried and/or chemically pre-treated or not dried and/or chemically pre-treated. Examples of typical fillers include but are not limited to any one or any combination of; ground quartz (silica powder), precipitated silica, fumed silica, aluminum trihydrate (ground or precipitated), magnesium dihydrate (ground or precipitated), or alumina.

Thermally conductive fillers are known in the art, see for example, U.S. Patent 6,169,142 (col. 4, lines 7-33). Component (D) may comprise an inorganic filler, a meltable filler, or a combination thereof. Inorganic fillers are exemplified by onyx; aluminum trihydrate, metal oxides such as aluminum oxide, beryllium oxide, magnesium oxide, and zinc oxide; nitrides such as aluminum nitride and boron nitride; carbides such as silicon carbide and tungsten carbide; barium titanate, carbon fibers, diamond, graphite, magnesium hydroxide, and a combination thereof.

Component (D) may be a single thermally conductive filler or a combination of two or more thermally conductive fillers that differ in at least one property such as particle shape, average particle size, particle size distribution, and type of filler. In certain embodiments, it may be desirable to combine a first thermally conductive filler having a larger average particle size with a second thermally conductive filler, which may be of the same or different material as the first filler, having a smaller average particle size in a proportion meeting the closest packing theory distribution curve. Use of a first filler having a larger average particle size and a second filler having a smaller average particle size than the first filler may improve packing efficiency, may reduce viscosity, and may enhance heat transfer.

The shape of the thermally conductive filler particles is not specifically restricted; however, rounded or spherical particles may prevent viscosity increase to an undesirable level upon high loading of the thermally conductive filler in the composition. The average particle size of the thermally conductive filler will depend on various factors including the type of thermally conductive filler-selected for component (D) and the exact amount added to the curable composition, as well as the bondline thickness of the device in which the cured product of the composition will be used. In some particular instances, the thermally conductive filler may have an average particle size ranging from 0.1 micrometer to 80 micrometers, alternatively 0.1 micrometer to 50 micrometers, and alternatively 0.1 micrometer to 10 micrometers.

Thermally conductive fillers are commercially available. For example, meltable fillers may be obtained from Indium Corporation of America, Utica, N.Y., U.S.A.; Arconium, Providence, R.I., U.S.A.; and AIM Solder, Cranston, R.I., U.S.A. Aluminum fillers are commercially available, for example, from Toyal America, Inc. of Naperville, Illinois, U.S.A. and Valimet Inc., of Stockton, California, U.S.A. Silver filler is commercially available from Metalor Technologies U.S.A. Corp. of Attleboro, Massachusetts, U.S.A. Zinc oxides, such as zinc oxides having trademarks KADOX® and XX®, are commercially available from Zinc Corporation of America of Monaca, Pennsylvania, U.S.A. Further, CB-A20S and Al-43-Me are aluminum oxide fillers of differing particle sizes commercially available from Showa-Denko, and AA-04, AA-2, and AA 18 are aluminum oxide fillers commercially available from Sumitomo Chemical Company. Boron nitride filler is commercially available from Momentive Corporation, Cleveland, Ohio, U.S.A.

The filler may be, or may function as a flame retardant. Flame retardants are known in the art. Examples of known flame retardants are carbon black, fused or fumed silica, silica gel, esters of phosphoric acid, phosphinates, polyphosphonates or copolyphosphonates, melamine, metal salts, hydroxides and oxides, alumina hydrates, metal borates, etc. and combinations thereof. Certain silicones, silanes and silsesquioxanes may also be used as flame retardants. When hydrosilylation-cured polyorganosiloxanes are used as soft tacky gels of this invention, flame retardants containing phosphorus, sulfur or nitrogen atoms are generally avoided to minimize the chance of interfering with curing. See, for example, Kashiwagi and Gilman, the Fire Retardancy of Polymeric Materials, pp 353-389 (2000) hereby incorporated by reference.

The (D) filler(s) is/are dispersed in component (A) and may be dispersed in (B) to (F). The dispersion may be heat-treated, dried, or chemically treated. Optional components (E) and (F), described below, may or may not interact or react with the filler(s). The overall level of (D) filler(s) based on total weight of (A) and (B) will be the minimum amount needed to achieve the desired function, and may be more than 5, 10, 20, 30, 40, or 50 wt%.

The curable prepolymers, i.e. monomers or oligomers; in the silicone compositions, component (A), (B), and (C); and component (D) are mixed. The composition cures to a soft, tacky thermally conductive cured silicone product, which may be colorless and transparent or colorless and semi-transparent, or having a color.

The composition may further comprise optional components.

Component (E), a silicone fluid, may be added. Component (E) may be alternatively described as only one of, or as a mixture of, a functional silicone fluid and/or a non-functional silicone fluid. In one embodiment, (E) is further defined as a polydimethylsiloxane, which is not functional. In another embodiment, (E) is further defined as a vinyl functional polydimethylsiloxane. The terminology "functional silicone fluid" typically describes that the fluid is functionalized to react in a hydrosilylation reaction, i.e., include unsaturated groups and/or Si-H groups. However, it is contemplated that the fluid may include one or more additional functional groups in addition to, or in the absence of, one or more unsaturated and/or Si-H groups. In various non-limiting embodiments, (E) is as described in one or more of U.S. Pat. Nos. 6,020,409; 4,374,967; and/or 6,001,918, (E) is not particularly limited to any structure or viscosity.

In one embodiment, (E) is a functional silicone fluid and reacts with (A) and/or (B) in the presence of (C) and (D). Said differently, the hydrosilylation reaction product may be further defined as the hydrosilylation reaction product of (A), (B), and (E) the functional silicone fluid wherein (A), (B), and (E) react via hydrosilylation in the presence of (C) and (D). In another embodiment, (A) and (B) react via hydrosilylation in the presence of (C), (D), and (E) a non-functional silicone fluid.

One or more of (A)-(E) may be combined together to form a mixture and the mixture may further react with remaining components of (A) - (E) to form the gel, with (E) being an optional component in either the mixture or as a remaining component. In other words, any combination of one or more (A)-(E) may react with any other combination of one or more of (A)-(E) so long as the gel is formed.

The pottant composition may comprise other optional components. The mixture, or any one or more of (A)-(E) may be independently combined with, treated with, or reacted with one or more additives. The additional Component may be selected from the group consisting of (F) filler treating agent, (G) an adhesion promoter, (H) a solvent or diluent, (I) a surfactant, (J) an acid acceptor, (K) a hydrosilylation stabilizer, and a combination thereof.

Component (F) is a filler treating agent. The filler(s) for component (D) may optionally be surface treated with component (F) a treating agent. Treating agents and treating methods are known in the art, see for example, U.S. Patent 6,169,142 (col. 4, line 42 to col. 5, line 2).

The amount of component (F) may vary depending on various factors including the type and amounts of fillers selected for components (D) and whether the filler is treated with component (F) in situ or before being combined with other components of the composition. However, the composition may comprise an amount ranging from 0.1 % to 2 % of component (F).

The component (F) may comprise an alkoxysilane having the formula: R⁶ₘSi(OR)₍₄₋ₘ₎, where subscript m is 1, 2, or 3 in any proportion within a particular component (F). Alternatively, subscript m in a particular component (F) may be 1 for all molecules, 2 for all molecules, or 3 for all molecules. Each R⁶ is independently a monovalent organic group, such as a hydrocarbon group of 1 to 50 carbon atoms, alternatively 6 to 18 carbon atoms. R⁶ is exemplified by alkyl groups such as hexyl, octyl, dodecyl, tetradecyl, hexadecyl, and octadecyl; and aromatic groups such as benzyl, phenyl and phenylethyl. R⁶ can be saturated or unsaturated, branched or unbranched, and unsubstituted. R⁶ can be saturated, unbranched, and unsubstituted.

Each R⁷ may be an unsubstituted, saturated hydrocarbon group of 1 to 4 carbon atoms, alternatively 1 to 2 carbon atoms. Alkoxysilanes for component (H) are exemplified by hexyltrimethoxysilane, octyltriethoxysilane, decyltrimethoxysilane, dodecyltrimethoxysilane, tetradecyltrimethoxysilane, phenyltrimethoxysilane, phenylethyltrimethoxysilane, octadecyltrimethoxysilane, octadecyltriethoxysilane, and a combination thereof.

Alkoxy-functional oligosiloxanes can also be used as treatment agents. Alkoxy- functional oligosiloxanes and methods for their preparation are known in the art, see for example, EP 1101167 A2. For example, suitable alkoxy-functional oligosiloxanes include those of the formula (R⁸O)ₙSi(OSiR⁹₂R¹⁰)₍₄₋ₙ₎. In this formula, subscript n is 1, 2, or 3, alternatively n is 3. Each R⁸ can be an alkyl group. Each R⁹ can be independently selected from saturated and unsaturated monovalent hydrocarbon groups of 1 to 10 carbon atoms. Each R¹⁰ can be a saturated or unsaturated monovalent hydrocarbon group having at least 11 carbon atoms.

Metal fillers can be treated with alkylthiols such as octadecyl mercaptan and others, and fatty acids such as oleic acid, stearic acid, titanates, titanate coupling agents, zirconate coupling agents, and a combination thereof.

Treatment agents for alumina or passivated aluminum nitride may include alkoxysilyl functional alkylmethyl polysiloxanes (e.g., partial hydrolysis condensate of R¹¹ₒR¹²ₚSi(OR¹³)₍₄₋ₒ₋ₚ₎ or cohydrolysis condensates or mixtures), or similar materials where the hydrolyzable group may comprise silazane, acyloxy or oximo. In all of these, a group tethered to Si, such as R¹¹ in the formula above, is a long chain unsaturated monovalent hydrocarbon or monovalent aromatic-functional hydrocarbon. Each R¹² is independently a monovalent hydrocarbon group, and each R¹³ is independently a monovalent hydrocarbon group of 1 to 4 carbon atoms. In the formula above, subscript o is 1, 2, or 3 and subscript p is 0, 1, or 2, with the proviso that "o +p" i.e. the sum of "o" and "p" is 1, 2, or 3. Treatment agents may also be polyorganosiloxanes and may include those of the formula R¹⁶₃Si(OSiR¹⁷)ᵣOSi(OR¹⁸)₃ where R¹⁶, R¹⁷,and R¹⁸ are each independently a monovalent alkyl group, e.g. methyl group, and subscript "r" is 1 to 200. One skilled in the art could optimize a specific treatment to aid dispersion of the filler without undue experimentation.

Component (G) is an adhesion promoter. Suitable adhesion promoters may comprise alkoxysilanes of the formula R¹⁴_{q}Si(OR¹⁵)_{(4-q)}, where subscript q is 1, 2, or 3, alternatively q is 3. Each R¹⁴ is independently a monovalent organofunctional group. R¹⁴ can be an epoxyfunctional group such as glycidoxypropyl or (epoxycyclohexyl)ethyl, an amino functional group such as aminoethylaminopropyl or aminopropyl, a methacryloxypropyl, or an unsaturated organic group. Each R¹⁵ is independently an unsubstituted, saturated hydrocarbon group of at least 1 carbon atom. R¹⁵ may have 1 to 4 carbon atoms, alternatively 1 to 2 carbon atoms. R¹⁵ is exemplified by methyl, ethyl, n-propyl, and iso- propyl.

Examples of suitable adhesion promoters include glycidoxypropyltrimethoxysilane and a combination of glycidoxypropyltrimethoxysilane with an aluminum chelate or zirconium chelate. Examples of adhesion promoters for hydro silylation curable compositions may be found in U.S. Patent 4,087,585 and U.S. Patent 5,194,649. The curable composition may comprise 0.5 % to 5 % of adhesion promoter based on the weight of the composition.

Component (H), a solvent or a diluent, can be added during preparation of the composition, for example, to aid mixing and delivery. All or a portion of component (H) may optionally be removed after the composition is prepared.

Component (I) is a surfactant. Suitable surfactants include silicone polyethers, ethylene oxide polymers, propylene oxide polymers, copolymers of ethylene oxide and propylene oxide, other non-ionic surfactants, and combinations thereof. The composition may comprise up to 0.05 % of the surfactant based on the weight of the composition.

Component (J) is an acid acceptor. Suitable acid acceptors include magnesium oxide, calcium oxide, and combinations thereof. The composition may comprise up to 2 % of component (J) based on the weight of the composition.

Component (K) is a hydrosilylation stabilizer to prevent premature curing of the curable composition. In order to adjust speed of curing and to improve handling of the composition under industrial conditions, the composition may be further combined with an alkyne alcohol, enyne compound, benzotriazole, amines such as tetramethyl ethylenediamine, dialkyl fumarates, dialkenyl fumarates, dialkoxyalkyl fumarates, maleates such as diallyl maleate, and a combination thereof. Alternatively, the stabilizer may comprise an acetylenic alcohol. The following are specific examples of such compounds: such as 2-methyl-3-butyn-2-ol, 3-methyl-1-butyn-3-ol, 3,5-dimethyl-1-hexyn-3-ol, 2-phenyl-3-butyn-2-ol, 3-phenyl-1-butyn-3-ol, 1-ethynyl-1-cyclohexanol, 1,1-dimethyl-2- propynyl)oxy)trimethylsilane, methyl(tris(1,1-dimethyl-2-propynyloxy))silane, or similar acetylene-type compounds; 3-methyl-3-penten-1-yne, 3,5-dimethyl-3-hexen-1-yne, or similar en-yne compounds; Other additives may comprise hydrazine-based compounds, phosphines-based compounds, mercaptane-based compounds, cycloalkenylsiloxanes such as methylvinylcyclosiloxanes such as 1,3,5,7-tetramethyl-1,3,5,7-tetravinyl cyclotetrasiloxane, 1,3,5,7-tetramethyl-1,3,5,7-tetrahexenyl cyclotetrasiloxane, benzotriazole, or similar triazols. The content of such inhibitors in the hydrosylation-curable thermoconductive silicone elastomer composition may be within the range of 0.0001 to 5 parts by weight per 100 parts by weight of component (A). Suitable hydro silylation cure inhibitors are disclosed by, for example, U.S. Patents 3,445,420; 3,989,667; 4,584,361; and 5,036,117.

One skilled in the art would recognize when selecting components for the composition described above, there may be overlap between types of components because certain Components described herein may have more than one function. For example, certain alkoxysilanes may be useful as filler treating agents and as adhesion promoters, and certain plasticizers such as fatty acid esters may also be useful as filler treating agents. One skilled in the art would be able to distinguish among and select appropriate components, and amounts thereof, based on various factors including the intended use of the composition and whether the composition will be prepared as a one-part or multiple-part composition.

The composition can be prepared by a method comprising combining all components by any convenient means such as mixing at ambient or elevated temperature. When the composition is prepared at elevated temperature, the temperature during preparation is less than the curing temperature of the composition.

The method may include the steps of providing components (A) - (D) (and optionally (E)), and the steps of combining one or more of (A)-(E) together. The components (A) to (D) and optionally (E) may be combined and offered as one ready-to-use part (one-part) or divided into two parts that would need to be combined before application (two-part). In the case of a two-part system, there is no limitation to the mix ratio, and the mix ratio may be one-to-one or unequal. The method may also include the steps of curing or partially curing, via a hydrosilylation reaction, (A) and (B), in the presence of (C) and (D) and optionally (E). This curing may take place without use of heat, or alternatively via heating. It is also contemplated that (A) and (B) may react with or cure with or in the presence of one of more of the aforementioned additives or other monomers or polymers previously described.

When component (F) is present, the composition may optionally be prepared by surface treating component (D) (and component (F), if present) with component (G) and thereafter mixing the product thereof with the other components of the composition. Alternatively, the composition may be prepared as a multiple part composition, for example, when component (K) is absent or when the composition will be stored for a long period of time before use. In the multiple part composition, the crosslinker and catalyst are stored in separate parts, and the parts are combined shortly before use of the composition. For example, a two part curable silicone composition may be prepared by combining components comprising base polymer, catalyst, thermally conductive filler and plasticizer, and one or more additional components in a base part by any convenient means such as mixing. A curing agent part may be prepared by combining components comprising crosslinker, base polymer, thermally conductive filler and plasticizer, and one or more additional components by any convenient means such as mixing. The components may be combined at ambient or elevated temperature, depending on the cure mechanism selected. When a two part curable silicone composition is used, the weight ratio of amounts of base to curing agent may range from 1:1 to 50:1; any ratio within this range may be selected as suitable based on the convenience. One skilled in the art would be able to prepare a curable composition without undue experimentation.

Power Converter Device. A power converter, a power optimizer or an inverter of the instant invention comprises one or more semiconductor modules for converting (1) direct current (DC) to stronger DC, i.e. a power optimizer, (2) DC to alternating current (AC), i.e. an inverter, or (3) AC to DC, e.g. an LED module. In particular, the instant invention is directed to a small-scale power optimizer or micro-inverter, not limited to but typically used with a photovoltaic panel, typically directly mounted behind a photovoltaic panel to isolate each panel and thus increasing the efficiency of conversion. The instant invention is also directed to LED module.

A converter or inverter in general is well known in the art. A schematic of a power converter device is shown in Figure 1. Briefly, a power converter 100 comprises a case 101 and a lid 102 typically made of metallic and other durable materials, within which an electronic substrate 104 bearing electric components 103 is operably placed. The electric components include one or more capacitors to stabilize incoming electricity, one or more converter modules comprising a transformer for increasing the voltage of the incoming electricity, operably connected by a silicon controlled rectifier to the inverter modules comprising one or more inductors and other parts to enable stable power conversion and inversion. A micro-inverter also comprises one or more heat sinks for managing generated heat. The entire substrate with electric components is encased in a pottant 105, typically dispensed into the case 101 through a hole 106, to protect the electronic components from the environmental elements.

A micro-inverter to which the instant invention is most preferably directed is located directly adjacent to a photovoltaic panel and often integrated into the structure of a photovoltaic panel. Each micro-inverter obtains optimum power by performing maximum power point tracking for its connected panel. Micro-inverters are small, compared to conventional inverters, typically having a dimension of less than 300 (width) X 200 (height) X 100 (depth) mm, and preferably less than 250, 200, 150, or even 100 mm in width, less than 150, 100, 70, or even 50 mm in height, and less than 80, 70, 50, 30, or even 15 mm in depth. The volume of a case housing micro-inverter components is typically less than 3 liters, 2, 1, 0.75, 0.5, or even less than 0.25 liter. Micro-inverters differ from conventional inverters in that due to their suitability to handle smaller amount of electricity at a lower voltage, heat generation is smaller. At the same time, because of their typical co-location with photovoltaic panels, they require a more robust protection from environmental elements such as water, moisture, varying temperature and ultraviolet and other radiation. A micro-inverter is described in, for example, U.S. Pat. No. 7796412, the entirety of which is herein incorporated by reference.

A power optimizer is a simpler structure, comprising only the capacitor and converter modules without the inverter module. The power optimizers to which the instant invention is directed are small compared to conventional optimizers, typically having a dimension of less than 300 (width) X 200 (height) X 100 (depth) mm, and preferably less than 250, 200, 150, or even 100 mm in width, less than 150, 100, 70, or even 50 mm in height, and less than 70, 50, 30, or even 15 mm in depth. The volume of a case housing micro-inverter components is typically less than 3 liters, 2, 1, 0.75, 0.5, or even less than 0.25 liter.

One aspect of the instant invention is a micro-inverter comprising the soft tacky gel described hereinabove. A soft tacky gel is used as a protective pottant in a micro-inverter providing superior handling and protection.

The disclosure also provides a method of forming the electronic article. The method comprises providing the curable soft tacky gel described herein, including the aforementioned steps of forming the gel, providing an electronic substrate wherein electronic components for inversion or conversion are operably connected on the substrate, locating the electronic substrate in a case, dispensing the curable pottant fluid into the case to sufficiently cover the substrate and the electric components, and curing the gel. Prior to dispensing into the case, the uncured pottant composition is sufficiently degassed to remove air from the uncured fluid and all parts are mixed. Degassing and mixing may be done by a commercially available mixer-dispenser.

### EXAMPLES

The following examples are included to demonstrate preferred embodiments of the invention. It should be appreciated by those of skill in the art that the techniques disclosed in the examples which follow represent techniques discovered by the inventor to function well in the practice of the invention, and thus can be considered to constitute preferred modes for its practice. However, those of skill in the art should, in light of the present disclosure, appreciate that many changes can be made in the specific embodiments which are disclosed and still obtain a like or similar result without departing from the spirit and scope of the invention. All percentages are in wt. %.

Preparation of pottants. Soft tacky gels comprising organopolysiloxanes were prepared by mixing components according to Table 1 below.

**Table 1. organopolysiloxane composition (units = wt%)**

| | (A) alkenyl containing organopolysiloxane | | | (B) Si-bonded H-containing organopolysiloxane | | | (C) catalyst | (D) filler | optional ingredients | |
|---|---|---|---|---|---|---|---|---|---|---|
| | Vinyl PDMS | | | MDD'M | (SiH%) | M'DM' (*) | Pt catalyst (0.52% active) | Ground Quartz (various grades) | Pigment | Inhibitor |
| | 500 mPa·s | 250 mPa·s | 75 mPa·s | | | | | | | |
| Ex. 1 | 53.1 | | | 0.54 | (0.78) | | 0.16 | 45 | 1.18 | 0.02 |
| Ex. 2 | 10.9 | 31.5 | | 2.2 | (0.115) | 7.3 | 0.10 | 47.2 | 0.8 | |
| Ex. 3 | 15.5 | 33.7 | | 2.5 | (0.115) | 2.35 | 0.10 | 45.3 | 0.55 | |
| Ex. 4 | 53.1 | | | 0.66 | (0.78) | | 0.16 | 45 | 1.06 | 0.02 |
| Comp. Ex. 1 | 28.3 | | 5.8% | 0.95 | (0.78) | 2.92% | 0.08 | 60.8 | 1.1 | 0.05 |
| Comp. Ex. 2 | 34.5 | | | 3 | (0.78) | | 0.12 | 62 | 0.28 | 0.1 |

| | | | | | | | | | | |
|---|---|---|---|---|---|---|---|---|---|---|
| (*)SiH%= 0.025%, 0.145% | | | | | | | | | | |

Surface tackiness was measured for the compositions of Examples according to the method of measuring surface tackiness described hereinabove.

**Table 2 Tackiness measurement (units = grams)**

| | |
|---|---|
| Ex. 1 | 11.2 |
| Ex. 2 | 5.9 |
| Ex. 3 | 4.3 |
| Ex. 4 | 5.8 |
| Comp. Ex. 1 | 0.2 |
| Comp. Ex. 2 | 0.1 |

Properties of Pottants. Physical properties of the pottants of the present invention prepared in the Examples above were determined. All pottants were cured at room temperature for 1 day.

**Table 3 Physical Properties of the Pottants**

| Sample | Viscosity (mPa·s) | Hardness | Therm. conductivity (W/m·K) | Flame retardant (internal test) |
|---|---|---|---|---|
| Ex. 1 | 2,600 | 15 (Shore 00) | 0.40 | UL 94 V-1 |
| Ex. 2 | 1,600 | 33 (Shore 00) | 0.42 | UL 94 V-1 |
| Ex. 3 | 1,600 | 39 (Shore 00) | 0.43 | UL 94 V-1 |
| Ex. 4 | 2,200 | 30 (Shore 00) | 0.40 | UL 94 V-1 |
| Comp. Ex. 1 | 3,100 | 45 Shore A | 0.70 | UL 94 V-0 |
| Comp. Ex. 2 | 6,000 | 61 Shore A | 0.62 | UL 94 V-0 |

Thermal Stress Generated by Pottants. Pottants were tested for the thermal stress they generate by measuring the pressure of expansion when heated under a controlled condition. The pressure was measured by the method described herein above using the thermal stress tester depicted in Figure 3. The temperature of the oil bath was set at 80 °C.

**Table 4 Thermal Stress Generated by Pottants**

| Sample | Thermal stress at 80 °C (Pa) |
|---|---|
| Ex. 1 | 2.21x10⁵ |
| Ex. 2 | 6.27x10⁵ |
| Ex. 3 | 7.52x10⁵ |
| Ex. 4 | 5.52x10⁵ |
| Comp. Ex. 1 | 3.07x10⁶ |
| Comp. Ex. 2 | 5.10x10⁶ |

Delamination. A model converter was prepared by filling aluminum cases with uncured pottant examples 1-4 and comparative examples 1-2 and the pottants were cured as above. The aluminum cases are then exposed to thermal cycling in a chamber under the condition of -45 to125 °C, 500 cycles, 1 hour/ cycle. After the thermal cycling, the pottants were visually inspected for delamination from the aluminum case.

**Table 5 Delamination observation after thermal cycling test**

| | Delamination |
|---|---|
| Ex. 1 | 0% |
| Ex. 2 | 0% |
| Ex. 3 | 0% |
| Ex. 4 | 0% |
| Comp. Ex. 1 | 100% |
| Comp. Ex. 2 | 35% |

## Claims

1. A curable polymer composition for use as a pottant of a power converter, wherein the composition when cured, has a hardness measured by Shore A scale less than 30, thermal conductivity of no less than 0.2 W/m·K, and has a tacky surface, wherein the tacky surface has a tackiness value of greater than 2.5 grams measured at temperature of 25° ± 2°C and according to the method described in paragraph 13 of the description;
wherein the curable polymer composition comprises:
(A) an organopolysiloxane having an average of at least 0.5 silicon-bonded alkenyl group per individual polymer molecule;
(B) an organopolysiloxane curing agent having at least two silicon-bonded hydrogen atoms per molecule;
(C) a hydrosilylation catalyst; and
(D) a thermally conductive filler;
wherein the viscosity of the curable polymer composition is less than 3000 centipoise measured at 25°C and according to the method described in paragraph 11 of the description.

2. The composition according to claim 1, wherein the thermally conductive filler has an average size ranging from 0.1 micrometer to 80 micrometers.

3. The composition according to claim 2, wherein the thermally conductive filler has an average particle size of less than 5 microns.

4. The composition according to claim 3, wherein the thermally conductive filler is ground quartz.

5. The composition according to claim 1 or 2, wherein the cured composition passes UL 94 V-1 flammability rating or better.

6. The composition according to claim 2 further comprising any one or more of
(E), a silicone fluid;
(F) filler treating agent, (G) an adhesion promoter, (H) a solvent or diluent, (I) a surfactant, (J) an acid acceptor, and (K) a hydrosilylation stabilizer.

7. A cured composition of any of the foregoing claims.

8. A power converter device comprising the composition according to claim 7.

9. The device according to claim 8 that is a junction box, a micro-inverter, a power optimizer or a light-emitting diode converter.

10. The device according to claim 9 wherein the device is used in a photovoltaic application.

11. A method of manufacturing a power converter device comprising the steps of:
(a) operably assembling electronic components comprising the power converter device into a case;
(b) dispensing the composition of any of claims 1-4 into the case to cover the electronic components; and
(c) curing the composition.

## Patentansprüche

1. Härtbare Polymerzusammensetzung zur Verwendung als Vergussmasse eines Leistungswandlers, wobei die Zusammensetzung nach dem Härten, gemessen anhand der Shore-A-Skala, eine Härte von weniger als 30 aufweist, eine Wärmeleitfähigkeit von nicht weniger als 0,002 W(cm.°C)[0,2 W/m.K] und eine klebrige Oberfläche aufweist, wobei die klebrige Oberfläche, gemessen bei einer Temperatur von 25° ± 2 °C und gemäß dem in Absatz 13 der Beschreibung beschriebenen Verfahren, einen Klebrigkeitswert von über 2,5 Gramm aufweist;
wobei die härtbare Polymerzusammensetzung umfasst:
(A) ein Organopolysiloxan, das durchschnittlich mindestens 0,5 siliciumgebundene Alkenylgruppen pro einzelnem Polymermolekül aufweist;
(B) ein Organopolysiloxan-Härtungsmittel mit mindestens zwei siliciumgebundenen Wasserstoffatomen pro Molekül;
(C) einen Hydrosilylierungskatalysator; und
(D) ein wärmeleitfähiges Füllmittel;
wobei die Viskosität der härtbaren Polymerzusammensetzung, gemessen bei 25 °C und gemäß dem in Absatz 11 der Beschreibung beschriebenen Verfahren, weniger als 3000 Centipoise beträgt.

2. Zusammensetzung nach Anspruch 1, wobei das wärmeleitfähige Füllmittel eine durchschnittliche Größe aufweist, die im Bereich von 0,1 Mikrometer bis 80 Mikrometer liegt.

3. Zusammensetzung nach Anspruch 2, wobei das wärmeleitfähige Füllmittel eine durchschnittliche Teilchengröße von weniger als 5 Mikrometer aufweist.

4. Zusammensetzung nach Anspruch 3, wobei das wärmeleitfähige Füllmittel gemahlener Quarz ist.

5. Zusammensetzung nach Anspruch 1 oder 2, wobei die gehärtete Zusammensetzung einen Entflammbarkeitswert von UL 94 V-1 oder besser erreicht.

6. Zusammensetzung nach Anspruch 2, ferner eines oder mehrere der folgenden umfassend:
(E) ein Silikonfluid;
(F) ein Füllmittelbehandlungsmittel, (G) einen Haftvermittler, (H) ein Lösemittel oder Verdünnungsmittel, (I) ein Tensid, (J) einen Säureakzeptor und (K) einen Hydrosilylierungsstabilisator.

7. Gehärtete Zusammensetzung nach einem der vorstehenden Ansprüche.

8. Leistungswandlervorrichtung, die Zusammensetzung nach Anspruch 7 umfassend.

9. Vorrichtung nach Anspruch 8, bei der es sich um eine Anschlussdose, einen Mikrowechselrichter, einen Leistungsoptimierer oder einen Leuchtdiodenwandler handelt.

10. Vorrichtung nach Anspruch 9, wobei die Vorrichtung in einer photovoltaischen Anwendung verwendet wird.

11. Verfahren zur Herstellung einer Leistungswandlervorrichtung, die folgenden Schritte umfassend:
(a) funktionsmäßiges Einbauen von elektronischen Komponenten, die Leistungswandlervorrichtung umfassend, in ein Gehäuse;
(b) Abgeben der Zusammensetzung nach einem der Ansprüche 1 bis 4 in das Gehäuse, um die elektronischen Komponenten zu bedecken; und
(c) Härten der Zusammensetzung.

## Revendications

1. Composition de polymère durcissable destinée à être utilisée comme matériau d'enrobage d'un convertisseur de puissance, dans lequel la composition, lorsqu'elle est durcie, présente une dureté mesurée par l'échelle Shore A inférieure à 30, une conductivité thermique supérieure ou égale à 0,002 W(cm. °C) [0,2 W/mK], et présente une surface collante, dans lequel la surface collante a une valeur de pégosité supérieure à 2,5 g mesurée à une température de 25° ± 2 °C et selon le procédé décrit au paragraphe 13 de la description ;
dans laquelle la composition de polymère durcissable comprend :
(A) un organopolysiloxane ayant une moyenne d'au moins 0,5 groupe alcényle lié au silicium par molécule de polymère individuelle ;
(B) un agent de durcissement d'organopolysiloxane ayant au moins deux atomes d'hydrogène liés au silicium par molécule ;
(C) un catalyseur d'hydrosilylation ; et
(D) une charge thermoconductrice ;
dans laquelle la viscosité de la composition de polymère durcissable est inférieure à 3 000 centipoises mesurée à 25 °C et selon le procédé décrit au paragraphe 11 de la description.

2. Composition selon la revendication 1, dans laquelle la charge thermoconductrice a une taille moyenne allant de 0,1 micromètre à 80 micromètres.

3. Composition selon la revendication 2, dans laquelle la charge thermoconductrice a une taille moyenne inférieure à 5 microns.

4. Composition selon la revendication 3, dans laquelle la charge thermoconductrice est du quartz broyé.

5. Composition selon la revendication 1 ou 2, dans laquelle la composition durcie répond à la norme d'inflammabilité UL 94 V-1 ou supérieure.

6. Composition selon la revendication 2, comprenant en outre un ou plusieurs éléments parmi
(E), un fluide de silicone ;
(F) un agent de traitement de charge, (G) un promoteur d'adhérence, (H) un solvant ou un diluant, (I) un tensioactif, (J) un accepteur d'acide, et (K) un stabilisateur d'hydrosilylation.

7. Composition durcie selon l'une quelconque des revendications précédentes.

8. Dispositif de conversion de puissance comprenant la composition selon la revendication 7.

9. Dispositif selon la revendication 8 qui est une boîte de jonction, un micro-inverseur, un optimiseur de puissance ou un convertisseur de diode électroluminescente.

10. Dispositif selon la revendication 9, dans lequel le dispositif est utilisé dans une application photovoltaïque.

11. Procédé de fabrication d'un dispositif de conversion de puissance comprenant les étapes consistant à :
(a) assembler de manière fonctionnelle des composants électroniques comprenant le dispositif de conversion de puissance dans un boîtier ;
(b) distribuer la composition selon l'une quelconque des revendications 1 à 4 dans le boîtier pour recouvrir les composants électroniques ; et
(c) faire durcir la composition.
